# EUROPEAN PATENT SPECIFICATION

(11) **EP 0 580 220 B1**
(45) Date of publication and mention of the grant of the patent: **03.09.1997**
(21) Application number: 93202047.2
(22) Date of filing: 12.07.1993
(51) Int. Cl.: A01K 1/12, A01K 1/01

(54) **A milking box with a milking robot and cleaning means**
Melkbox mit einem Melkrobot und einer Reinigungsvorrichtung
Stalle de traite avec un robot de traite et un dispositif de nettoyage

(30) Priority: 23.07.1992 NL 9201322
(43) Date of publication of application: 26.01.1994
(60) Divisional application: 97200356.0
(73) Proprietor: C. van der Lely N.V., NL-3155 PD Maasland (NL)
(72) Inventor: van den Berg, Karel, NL-2971 BR Bleskensgraaf (NL); Bom, Cornelis Johannes Gerardus, NL-3181 VC Rozenburg (NL); Fransen, René, NL-3135 ZD Vlaardingen (NL)
(74) Representative: Mulder, Herman

(56) References cited:
- EP-A- 0 323 444
- EP-A- 0 384 531
- FR-A- 1 306 778

## Description

The invention relates to a milking box including a cleaning device, with the aid of which the floor of the milking box can be cleaned.

Such a milking box is disclosed in EP-A-0384531.

This milking box is equipped with sprayers, with the aid of which water can be sprayed onto the floor. During the cleaning of the floor, it may happen that water and/or dung splashes up and could be deposited in undesired places.

The invention has for its object to provide a cleaning device, in which the said drawback does not occur or is at least obviated to a significant extent.

To that end, the cleaning device is provided with a dung scraper and, arranged at one side of the milking box, a control mechanism, with the aid of which the dung scraper is reciprocated over the milking box floor, the dung scraper being active in one direction of travel and inactive in the other direction of travel. Thus, the floor of the milking box is "dry"-cleaned and the dung lying on the floor is always discharged in a desired direction.

From FR-A-1 306 778 there is known a dung scraper which is reciprocated over a bin floor.

In accordance with a preferred feature of the invention, the control mechanism includes a rod system and an operating member, such as, for example, an operating cylinder. Using the rod system, the dung scraper can be moved by remote control of the operating member, which renders it possible to position the operating member in a location which is far removed from the dung-contaminated floor.

In accordance with a further preferred feature of the invention, the dung scraper is provided at its bottom side with a flexible wiper wich extends through at least the greater part of the width of the milking box. A dung scraper having a flexible wiper is particularly advantageous when the floor surface is uneven, e.g. in the case of a grid floor, since the wiper blade is deformable and consequently always remains in proper contact with the floor, so that adequate cleaning remains possible.

So as to effect that the flexible wiper of the dung scraper is only active in one direction of travel, the rod system includes, provided on the dung scraper, a first rotatable, horizontally arranged shaft which is rigidly connected to the flexible wiper and which during at least a portion of the motion thereof is rotated by the control mechanism.

In accordance with a still further preferred feature of the invention, the rod system also includes, provided on the dung scraper, a second rotatable shaft which extends parallel to the first shaft and is rigidly connected to a rod of the rod system and is further coupled via an intermediate rod with lever arms to the first shaft, so that a rotation of the second shaft will result in a rotation of the first shaft and consequently in a rotation of the flexible wiper.

In a preferred embodiment of the invention, the dung scraper is fitted with a stop which cooperates with a lever arm and so limits the rotary motion of the flexible wiper that, when the flexible wiper is rotated in one direction, the wiper looses contact with the floor, whereas, when the wiper is rotated in the opposite direction, it comes into contact with the floor.

In accordance with a still further preferred feature of the invention, the dung scraper includes guide elements which run along a rail, which rail is located on or in the floor of the milking box. Guiding the dung scraper along a rail achieves that the dung scraper does not deviate from its direction of travel during the reciprocating motion over the floor, while at the same time the dung scraper is prevented from deflecting upwardly as this might cause same to loose contact with the floor.

In accordance with yet another preferred feature of the invention, the milking box floor portion extending between the rails is designed as a grid with diagonal bars, below which there is provided a slurry cellar. The dung lying on the grid is pushed through the apertures between the bars into the slurry cellar during the reciprocating motion of the dung scraper over the grid. As the bars are arranged diagonally relative to the direction of travel of the dung scraper, it is achieved on the one hand that the cow's legs have a sufficient grip on the grid floor, whilst on the other hand the dung scraper does not experience too much resistance from the bars during its reciprocating motion.

In accordance with yet another preferred feature of the invention, the rail extends in the longitudinal direction of the milking box, so that the control mechanism can be placed at the rear side of the milking box, where it does not form an obstacle, for example during connection of the milking cluster from the cow's side.

In accordance with a still further preferred feature of the invention, the side of the milking box is provided with a stop, on which an electroshock device is disposed, which stop is in such a position that, at least during a portion of the dwelling time of the animal in the milking box, it is in contact with a portion of the animal. The electroshock device can be used to induce an animal to leave the milking box, for example when the animal is found to stay in the milking box after the exit door has opened.

In accordance with a still further preferred feature of the invention, the milking box includes a computer, with the aid of which control signals can be generated for controlling the control member and/or the electroshock device. This enables an automatic cleaning of the milking box floor by means of the dung scraper, without human intervention and/or supervision. By means of the computer it can also be determined whether the floor of the milking box is to be cleaned after a predetermined time interval or after an animal has left the milking box.

In accordance with yet another preferred feature of the invention, the milking box includes an implement for automatically milking animals, such as cows, which comprises a milking robot, by means of which a milking cluster can be connected automatically to the teats of the animal's udder.

For a better understanding of the invention and to show how the same may be carried into effect, reference will now be made, by way of example, to the accompanying drawings, in which:
Figure 1 is a plan view of the milking box including a cleaning device for cleaning the floor of the milking box;
Figure 2 is a side view of the cleaning device shown in Figure 1;
Figure 3 is, to an enlarged scale, a view of a portion of the dung scraper of Figure 2;
Figure 4 is a plan view of the dung scraper, taken in the direction of the arrow IV in Figure 3;
Figure 5 is, like Figure 3, a side view of the dung scraper, the difference being that the dung scraper is moved in the opposite direction.

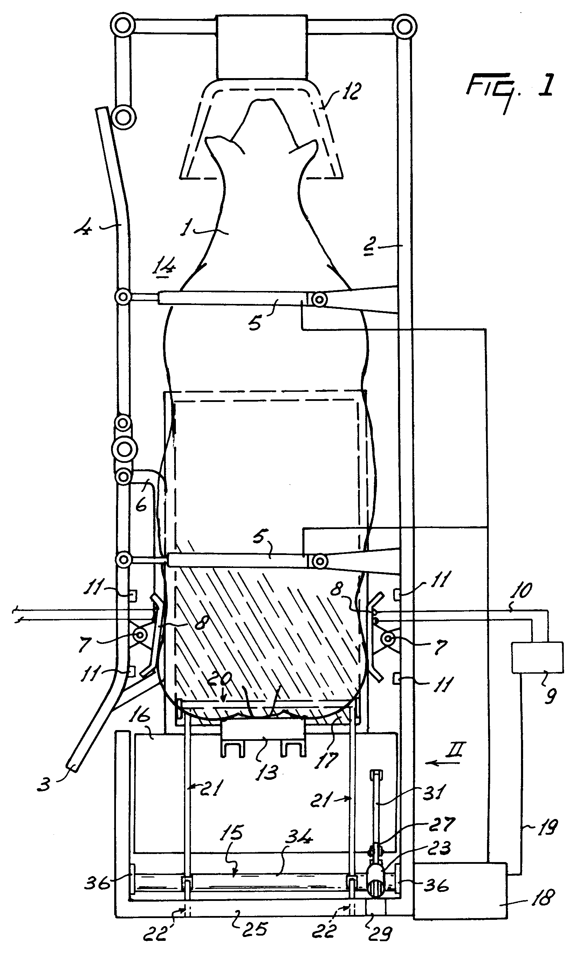

Figure 1 is a plan view of a cow 1 in a milking box 2, which has an entrance door 3 and an exit door 4 for allowing the cow 1 to enter and to leave same. Operating cylinders 5, disposed between the doors and a further portion of the frame of the milking box 2, are present for controlling the entrance door 3 and the exit door 4. Near its bottom side, the entrance door 3 includes a slanting portion 6 which curves towards the centre of the milking box 2. The curving portion 6 of the entrance door bounds the area in which the hind legs of the cow 1 can stand, so that the cow 1 has her hind legs in a defined position. On the entrance door 3 and the facing side of the frame of the milking box 2 there are provided stops 8 which are pivotal about predominantly vertical shafts 7 and, after closing of the entrance door 3, bear on a relevant side of the cow 1. An electroshock device 9 is connected to the stops 8 by means of an electric lead 10. The stops 8 can be charged with electric current by means of the electroshock device 9. To prevent other portions of the milking box 2 from also being charged, the pivot shafts 7 of the stops 8 are insulated and the angle through which the stops 8 can be pivoted about the shafts 7 is limited by limiting elements 11, which are also insulated.

Near the leading side of the milking box 2 there is arranged a feed trough 12, in which food can be supplied to the cow 1 during her stay in the milking box 2. At some distance from the rear side of the milking box 2 there is arranged a partition 13 on the floor 14 of the milking box 2. The partition 13 extends parallel to the rear side of the milking box 2 and bounds the dwelling area of the cow 1 in the milking box 2 at the rear side. The width of the partition 13 amounts to approximately 1/3 of the width of the milking box 2.

A cleaning device 15 is accommodated in the space between the partition 13 and the rear side of the milking box 2. In addition, the floor 14 of the milking box 2 accommodates a slurry cellar 16, which extends in the longitudinal direction of the milking box 2 to near the centre of the milking box 2. In the place where the animal stands in the milking box 2, the slurry cellar is covered by a grid 17 which is flush with the floor 14 and includes bars which extend at an angle relative to the longitudinal direction of the milking box 2.

A computer 18 is arranged near the rear side of the milking box 2 against the side edge of the frame. By means of the computer 18, control signals can be generated for controlling the electroshock device 9, the cleaning device 15 and the operating cylinders 5. The computer 18 applies the control signals to the relevant control members via the electric lines 19.

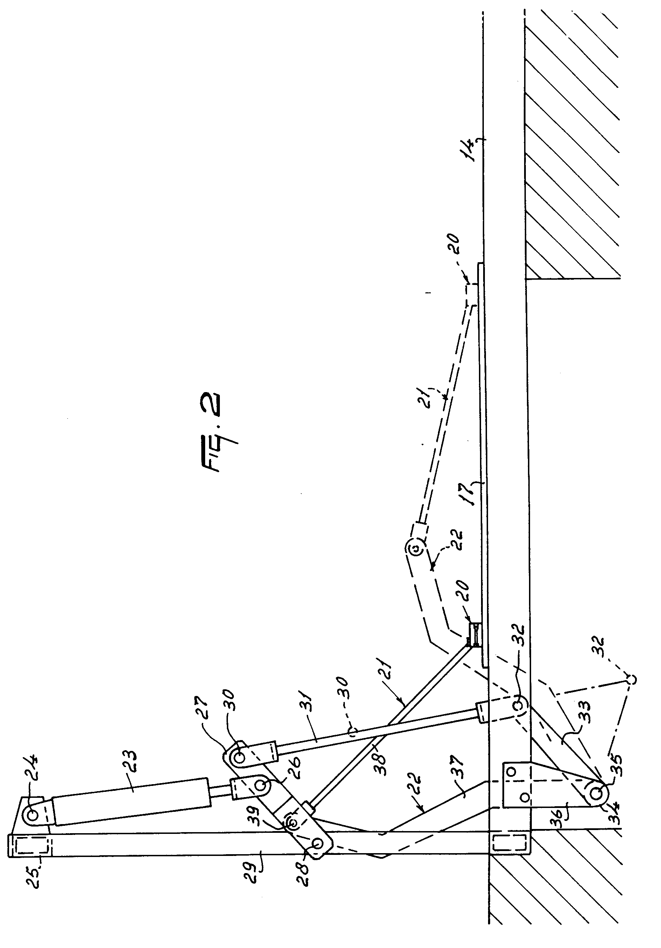

As is shown in Figure 2, the cleaning device 15 is provided with a dung scraper 20 which is reciprocated over the grid 17 with the aid of a control mechanism 21. The control mechanism 21 comprises a rod system 22 and an operating member 23. The operating member 23 is designed, in this embodiment, as a pneumatic operating cylinder. The operating cylinder 23 has one end pivotably connected to a horizontal shaft 24 arranged at an upper beam 25 of the frame of the milking box 2 and its other end pivotably connected to a further horizontal shaft 26, which is disposed on a first arm 27 of the rod system 22.

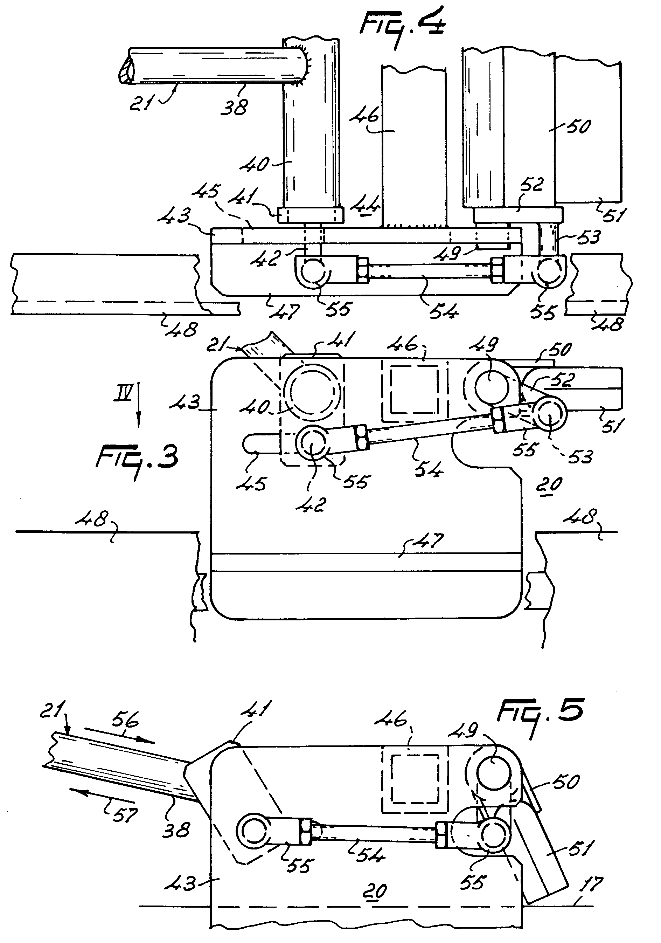

The first arm 27 has one end pivotably connected to an upright 29 of the frame of the milking box 2. An intermediate rod 31 is connected to the other end of the first arm 27 in such a manner that it is pivotal about a horizontal shaft 30. The intermediate rod 31 has its other end rotatably connected to a horizontal shaft 32 disposed on the end of a second arm 33 of the rod system 22. The second arm 33 is rigidly connected by means of its other end to a tube 34. The tube 34 is rotatable about a horizontal shaft 35 which is secured under the floor 14 of the milking box 2 and near the rear end of the milking box 2 to the floor 14 by means of supports 36. The tube 34, which extends through the width of the slurry cellar 16, is provided with two spaced apart strips 37. The strips 37 extend in a straight line from the tube 34 and then merge into a V-shaped portion. Connected to each of the V-shaped ends of the strips 37 there is a control rod 38 which is pivotal about a horizontal shaft 39. The two spaced-apart control rods 38 have their other ends rigidly connected to a tube 40 of the dung scraper 20 (Figure 4). Each end of the tube 40 is provided with a strip-like lever arm 41, on which a stub axle 42 is perpendicularly disposed (see Figures 3 to 5). The stub axles 42 are each inserted through an upright side wall 43 of a guide member 44. The stub axles 42 are slidable along a slotted hole 45 which extends horizontally in the side wall 43. The two side walls 43 of the guide member 44 are rigidly interconnected by a small horizontal box-like beam 46. The side walls 43 each include, arranged near their lower side, a strip 47 which is arranged at a square angle and co-operates with a rail 48 provided on the floor 14 of the milking box 2. The rail 48 is formed as a turned-over U-profile.

Between the side walls 43 there is arranged a rotatable shaft 49, on which two spaced-apart parallel strips 50 are disposed (Figure 5). A flexible wiper 51 is clamped between the two parallel strips 50. The flexible wiper 51 is preferably made of rubber. A strip-like lever arm 52 is disposed at some distance from each end of the shaft 49. Near the free end of the lever arm 52 there is arranged a stub axle 53 which extends perpendicularly to the lever arm 52. By means of an intermediate rod 54, the stub axle 53 is coupled to the stub axle 42. The intermediate rod 54 disposed between the two lever arms 41 and 52 is provided at both ends with ball joints 55. The length of the intermediate rod 54 can be adjusted by rotating the ball joints 55 about the intermediate rod 54.

The mode of operation of the dung scraper 20 will now be described in greater detail with reference to Figures 2 to 5.

After an animal has been treated in the milking box 2, the exit door 4 is opened, whereafter the animal can leave the milking box 2. By means of a (non-shown) cow recognition system it can be checked whether the animal has indeed left the milking box 2. If after some time has elapsed it is found that the animal is still in the milking box 2, the computer 18 supplies a control signal, with the aid of which the electroshock device 9 is triggered. The animal then receives via the stops 11 an electric shock, which induces her to leave the milking box.

As soon as the milking box 2 is empty, the computer 18 applies a control signal to the cleaning device 15, whereafter the operating member 23 is energized. This results in the first arm 27 being pivoted downwardly about the horizontal shaft 28, whilst the control rods 38 are pushed forwards by the strips 37, which is illustrated in Figure 2 by arrow 56. During the first part of the motion of the control rod 38, the dung scraper is not moved along the rail 48. During said part of this motion, the tube 40 slides in the slotted hole 45 by means of its stub axles 42 from the position shown in Figure 5 to the position shown in Figure 3. During sliding of the tube 40 along the slotted holes 45, the flexible wiper 51 is pivoted upwardly by rotation of the shaft 49 (Figure 3). When the stub axles 42 are in abutment with the end of the slotted holes 45, the dung scraper 20 is carried along by the control rod 38 in the direction indicated by the arrow 56. The dung scraper 20 is moved along the rail 48 to as far as the end of the grid 17, as is illustrated in Figure 2 by means of broken lines. Thereafter the computer 18 again applies a control signal to the cleaning device 15, whereafter the operating member 23 moves the control rod 38 in the direction of the arrow 57 (Figures 3, 5). During the first part of the travel of the control rod 38 in the direction of arrow 57, the flexible wiper 51 is pivoted downwardly until the stub axles 42 arrive at the other end of the slotted hole 45. In this position, the end of the flexible wiper 51 bears on the grid 17 of the floor 14. Thereafter the dung scraper 20 is moved by the control rod 38 in the direction indicated by the arrow 57. This causes the flexible wiper 51 to push dung lying on the grid 17 to between the bars of the grid 17, whereafter the dung drops into the slurry cellar 16. Should there be a great deal of dung on the grid 17, the dung scraper 20 can again be reciprocated thereover.

After the grid 17 has been cleaned, the entrance door 3 can be opened, whereafter an other animal can enter the milking box 2.

## Claims

1. A milking box (2) including a cleaning device (15), with the aid of which the floor (14) of the milking box (2) can be cleaned, characterized in that the cleaning device (15) is provided with a dung scraper (20) and, arranged at one side of the milking box (2), a control mechanism (21), with the aid of which the dung scraper (20) is reciprocated over the milking box floor (14), the dung scraper (20) being active in one direction of travel and inactive in the other direction of travel.

2. A milking box as claimed in claim 1, characterized in that the control mechanism (21) comprises a rod system (22) and an operating member (23), such as, for example, an operating cylinder.

3. A milking box as claimed in claim 1 or 2, characterized in that, at its bottom side, the dung scraper (20) is provided with a flexible wiper (51) which extends through at least the greater part of the width of the milking box (2).

4. A milking box as claimed in claim 3, characterized in that the rod system (22) includes, provided on the dung scraper (20), a first rotatable, horizontally arranged shaft (49) which is rigidly connected to the flexible wiper (51) and which during at least a part of the motion thereof is rotated by the control mechanism (21).

5. A milking box as claimed in claim 4, characterized in that the rod system (22) includes, provided on the dung scraper (20), a second rotatable shaft (42) which extends parallel to the first shaft and is rigidly connected to a rod (38) of the rod system (22) and which is further coupled via an intermediate shaft (54) with lever arms (41) to the first shaft (49), so that a rotation of the second shaft (42) will result in a rotation of the first shaft (49) and consequently in a rotary motion of the flexible wiper (51).

6. A milking box as claimed in claim 4 or 5, characterized in that the dung scraper (20) is provided with a stop (45) which co-operates with a lever arm (41) and so limits the rotation of the flexible wiper (51) that, when the flexible wiper (51) is rotated in one direction, it looses contact with the floor (14), whereas, when the wiper (51) is rotated in the opposite direction, it comes into contact with the floor (14).

7. A milking box as claimed in any one of the preceding claims, characterized in that the dung scraper (20) is provided with guide elements (47) running in a rail (48), which rail (48) is disposed on or in the floor (14) of the milking box (2).

8. A milking box as claimed in claim 7, characterized in that the floor (14) of the milking box (2) between the rails (48) is designed as a slurry cellar which is covered by a grid (17) with diagonal bars.

9. A milking box as claimed in claim 7 or 8, characterized in that the rail (48) extends in the longitudinal direction of the milking box (2).

10. A milking box as claimed in any one of the preceding claims, characterized in that a side wall of the milking box (2) includes a stop (18) on which an electroshock device (9) is arranged, the stop (8) being positioned such that during at least a portion of the time the animal (1) is in the milking box (2) it is in contact with a portion of the animal (1).

11. A milking box as claimed in claim 10, characterized in that the milking box (2) includes a computer (18), with the aid of which control signals can be generated for the control of the control mechanism (21) and/or the electroshock device (9).

## Patentansprüche

1. Melkbox (2) mit einer Reinigungsvorrichtung (15), mittels der der Boden (14) der Melkbox (2) zu reinigen ist,
dadurch gekennzeichnet, daß die Reinigungsvorrichtung (15) einen Mistabstreifer (20) sowie eine an einer Seite der Melkbox (2) angeordnete Steuervorrichtung (21) aufweist, mittels der der Mistabstreifer (20) über dem Melkstandboden (14) hin- und herbewegt wird, wobei er in der einen Bewegungsrichtung aktiv und in der anderen nicht aktiv ist.

2. Melkbox nach Anspruch 1,
dadurch gekennzeichnet, daß die Steuervorrichtung (21) ein Gestänge (22) und ein Steuerelement (23) wie z. B. einen Arbeitszylinder aufweist.

3. Melkbox nach Anspruch 1 oder 2,
dadurch gekennzeichnet, daß der Mistabstreifer (20) an seiner Unterseite mit einem flexiblen Wischer (51) versehen ist, der sich zumindest über den größten Teil der Breite der Melkbox (2) erstreckt.

4. Melkbox nach Anspruch 3,
dadurch gekennzeichnet, daß das Gestänge (22) eine auf dem Mistabstreifer (20) angebrachte erste drehbare, horizontal angeordnete Welle (49) aufweist, die mit dem flexiblen Wischer (51) starr verbunden ist und während zumindest eines Teiles der Wischerbewegung von der Steuervorrichtung (21) gedreht wird.

5. Melkbox nach Anspruch 4,
dadurch gekennzeichnet, daß das Gestänge (22) eine auf dem Mistabstreifer (20) angebrachte zweite drehbare Welle (42) aufweist, die sich parallel zu der ersten Welle erstreckt und mit einer Stange (38) des Gestänges (22) starr verbunden ist, und die ferner über eine Zwischenwelle (54) mit Hebelarmen (41) mit der ersten Welle (49) verbunden ist, so daß eine Drehung der zweiten Welle (42) eine Drehung der ersten Welle (49) und demzufolge eine Drehbewegung des flexiblen Wischers (51) bewirkt.

6. Melkbox nach Anspruch 4 oder 5,
dadurch gekennzeichnet, daß der Mistabstreifer (20) mit einem Anschlag (45) versehen ist, der mit einem Hebelarm (41) zusammenwirkt und die Drehbewegung des flexiblen Wischers (51) begrenzt, derart, daß der flexible Wischer (51) beim Drehen in der einen Richtung den Kontakt mit dem Boden (14) verliert, während er beim Drehen in der entgegengesetzten Richtung in Kontakt mit dem Boden (14) kommt.

7. Melkbox nach einem der vorhergehenden Ansprüche,
dadurch gekennzeichnet, daß der Mistabstreifer (20) Führungen (47) aufweist, die in einer Schiene (48) laufen, welche auf oder in dem Boden (14) der Melkbox (2) angeordnet ist.

8. Melkbox nach Anspruch 7,
dadurch gekennzeichnet, daß der Boden (14) der Melkbox (2) zwischen den Schienen (48) als Flüssigmistgrube ausgeführt ist, die durch einen Rost (17) mit diagonalen Stäben abgedeckt ist.

9. Melkbox nach Anspruch 7 oder 8,
dadurch gekennzeichnet, daß sich die Schiene (48) in Längsrichtung der Melkbox (2) erstreckt.

10. Melkbox nach einem der vorhergehenden Ansprüche,
dadurch gekennzeichnet, daß eine Seitenwand der Melkbox (2) einen Anschlag (8) aufweist, an dem eine Elektroschock-Vorrichtung (9) angeordnet ist, wobei der Anschlag (8) derart positioniert ist, daß er zumindest während eines Teiles der Aufenthaltsdauer des Tieres (1) in der Melkbox (2) mit einem Teil des Tieres (1) in Kontakt ist.

11. Melkbox nach Anspruch 10,
dadurch gekennzeichnet, daß die Melkbox (2) einen Computer (18) aufweist, mittels dessen Steuersignale zum Steuern der Steuervorrichtung (21) und/oder der Elektroschock-Vorrichtung (9) zu erzeugen sind.

## Revendications

1. Stalle de traite (2) comportant un dispositif de nettoyage (15) à l'aide duquel le plancher (14) de la stalle de traite (2) peut être nettoyé,
**caractérisée** en ce que le dispositif de nettoyage (15) est muni d'un racleur de bouse (20) et, disposé sur un côté de la stalle de traite (2), un mécanisme de commande (21) à l'aide duquel le racleur de bouse (20) est entraîné en va-et-vient sur le plancher (14) de la stalle de traite, le racleur de bouse (20) étant actif dans un sens de marche et inactif dans l'autre sens de marche.

2. Stalle de traite selon la revendication 1, caractérisée en ce que le mécanisme de commande (21) comprend un système de bielles (22) et un organe actionneur (23) tel que, par exemple, un vérin actionneur.

3. Stalle de traite selon la revendication 1 ou 2, caractérisée en ce que le racleur de bouse (20) est muni, à son côté inférieur, d'un balai flexible (51) qui s'étend sur au moins la majeure partie de la largeur de la stalle de traite (2).

4. Stalle de traite selon la revendication 3, caractérisée en ce que le système de bielles (22) comporte, prévu sur le racleur de bouse (20), un premier arbre rotatif (49) disposé horizontalement, qui est relié de manière rigide au balai flexible (51) et qui est entraîné en rotation, pendant au moins une partie du mouvement de celui-ci, par le mécanisme de commande (21).

5. Stalle de traite selon la revendication 4, caractérisée en ce que le système de bielles (22) comporte, prévu sur le racleur de bouse (20), un deuxième arbre rotatif (42) qui s'étend parallèlement au premier arbre et est relié rigidement à une barre (38) du système de bielles (22) et qui est en outre couplé par un arbre intermédiaire (54) avec des bras de levier (41) au premier arbre (49) de telle sorte qu'une rotation du deuxième arbre (42) a pour résultat une rotation du premier arbre (49) et par conséquent un mouvement de rotation du balai flexible (51).

6. Stalle de traite selon la revendication 4 ou 5, caractérisée en ce que le racleur de bouse (20) est muni d'une butée (45) qui coopère avec un bras de levier (41) et qui limite la rotation du balai flexible (51) de telle manière que, quand le balai flexible (51) est entraîné en rotation dans un certain sens, il perd le contact avec le plancher (14) tandis que, quand le balai (51) est entraîné en sens opposé, il vient en contact avec le plancher (14).

7. Stalle de traite selon l'une quelconque des revendications précédentes, caractérisée en ce que le racleur de bouse (20) est muni d'éléments de guidage (47) glissant dans un rail (48), lequel rail (48) est disposé sur le plancher (14) de la stalle de traite (2) ou dans ce plancher.

8. Stalle de traite selon la revendication 7, caractérisée en ce que le plancher (14) de la stalle de traite (2) entre les rails (48) est conçu sous la forme d'une fosse à déjections qui est recouverte par une grille (17) avec des barreaux en diagonale.

9. Stalle de traite selon la revendication 7 ou 8, caractérisée en ce que le rail (48) s'étend dans le sens longitudinal de la stalle de traite.

10. Stalle de traite selon l'une quelconque des revendications précédentes, caractérisée en ce qu'une paroi latérale de la stalle de traite (2) comporte un tampon (8) sur lequel est disposé un dispositif d'électrochoc (9), le tampon (8) étant positionné de telle sorte que, pendant au moins une partie du temps où l'animal est dans la stalle de traite (2), il est en contact avec une partie de l'animal (1).

11. Stalle de traite selon la revendication 10, caractérisée en ce que la stalle de traite (2) comporte un ordinateur (18) à l'aide duquel des signaux de commande peuvent être générés pour commander le mécanisme de commande (21) et/ou le dispositif d'électrochoc (9).
